# EUROPEAN PATENT APPLICATION

(11) **EP 2 354 920 A2**
(43) Date of publication of application: **10.08.2011**
(21) Application number: 11250049.1
(22) Date of filing: 17.01.2011
(51) Int. Cl.: G06F 3/12

(54) **Information processing apparatus, print controlling program, computer-readable storage medium, printing apparatus, and printing system**

(30) Priority: 27.01.2010 JP 2010015896
(71) Applicant: Ricoh Company Ltd., Tokyo 143-8555 (JP)
(72) Inventor: Suzuki, Ryoichi, Tokyo 143-8555 (JP)
(74) Representative: White, Duncan Rohan

(57) **Abstract**

A printer driver (105) installed in an information processing apparatus (100) includes a message queue that receives a request for a print setting used by a first MFP (150) in executing printing, a determining unit (121) that determines a source of the received request, and a display control unit (123) that controls to display a print setting screen based on setting information indicating conditions of settable printing functions depending on the source of the request when the determining unit (121) determines that the source of the request is a predetermined application.

## Description

The present invention relates to an information processing apparatus, a print controlling program, a computer-readable storage medium, a printing apparatus, and a printing system.

Conventionally, image forming apparatuses tend to be increasingly multifunctional as industrial technologies develop. In a multifunctional image forming apparatus, a printing cost changes depending on which functions are used. An example of functions increasing the printing cost is color printing. An example of the functions for enabling reduction in printing cost is an aggregating function.

Therefore, there is a demand for reduction in printing cost in a large company or the like by refraining from the use of color printing or promoting the use of aggregation printing, for example. An example of the technologies for addressing such a demand is disclosed in Japanese Patent Application Laid-open No. 2004-220532.

Japanese Patent Application Laid-open No. 2004-220532 discloses a technology that restricts available functions of a driver of an image forming apparatus to be installed to a personal computer (PC) and the like. Japanese Patent Application Laid-open No. 2004-220532 also discloses causing a host computer to install the driver having an available function restricted onto a PC and the like connected over a network. Because the technology disclosed in Japanese Patent Application Laid-open No. 2004-220532 restricts functions of the image forming apparatus made available to each PC is restricted, the demand mentioned above can be satisfied.

However, because the technology disclosed in Japanese Patent Application Laid-open No. 2004-220532 restricts options of functions made available to the user when the user uses the image forming apparatus, the user cannot execute printing under a printing condition the user prefers. Thus, there is another demand for releasing such a restriction of the functions for a particular print-out.

However, when such a demand is satisfied, the user often forgets restoring the setting back to the original after releasing the restriction of a driver function. Therefore, the printing cost reduction is less promoted.

The present invention is made in consideration of the foregoing, and an object of the present invention is to provide an information processing apparatus, a print controlling program, a computer-readable storage medium, a printing apparatus, and a printing system that can execute printing in a manner to satisfy a user demand while enabling reduction in printing cost.

It is an object of the present invention to at least partially solve the problems in the conventional technology.

According to an aspect of the present invention an information processing apparatus includes: a receiving unit that receives a request for a print setting used by a printing apparatus in executing printing; a determining unit that determines a source of the request received by the receiving unit; and a display control unit that controls displaying a print setting screen based on setting information indicating conditions of settable printing functions depending on the source of the request when the determining unit determines that a predetermined application is the source of the request.

According to another aspect of the present invention, a computer program product that includes a non-transitory computer usable medium having computer readable program codes embodied in the medium for processing information in an information processing apparatus that includes a generating unit, and an output unit, the program codes when executed causes a computer to execute: receiving a request for a print setting used by a printing apparatus in executing printing; determining a source of the request received at the receiving; and controlling displaying a print setting screen based on setting information indicating conditions of settable printing functions depending on the source of the request when a predetermined application is determined to be the source of the request at the determining.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a block diagram of a configuration of a printing system according to a first embodiment of the present invention;
Fig. 2 is a schematic of an example of a function setting file;
Fig. 3 is a schematic of a structure of a message queue;
Fig. 4 is a schematic of an example of a print screen displayed by a display control unit when the print screen is called up via an application;
Fig. 5 is a schematic of an example of a printer driver setting screen displayed by the display control unit when the setting screen is called up via an operating system (OS);
Fig. 6 is a schematic of an example of a print setting screen displayed by the display control unit when a detail setting button illustrated in Fig. 4 is pressed;
Fig. 7 is a schematic of an example of a print setting screen displayed by the display control unit when the print setting button illustrated in Fig. 5 is pressed;
Fig. 8 is a schematic of an exemplary screen according to a variation of the first embodiment in which the display control unit hides the printing functions that are allowed under restricted conditions;
Fig. 9 is a flowchart of a process of completing a print setting performed in the information processing apparatus according to the first embodiment;
Fig. 10 is a block diagram of a configuration of a printing system according to a second embodiment of the present invention;
Fig. 11 is a flowchart of a process of completing a print setting performed in an information processing apparatus according to the second embodiment; and
Fig. 12 is a schematic of a hardware configuration of the information processing apparatus.

Exemplary embodiments of an information processing apparatus, a print controlling program, a computer-readable storage medium, a printing apparatus, and a printing system according to the present invention will be described below in greater detail with reference to the accompanying drawings.

### First Embodiment

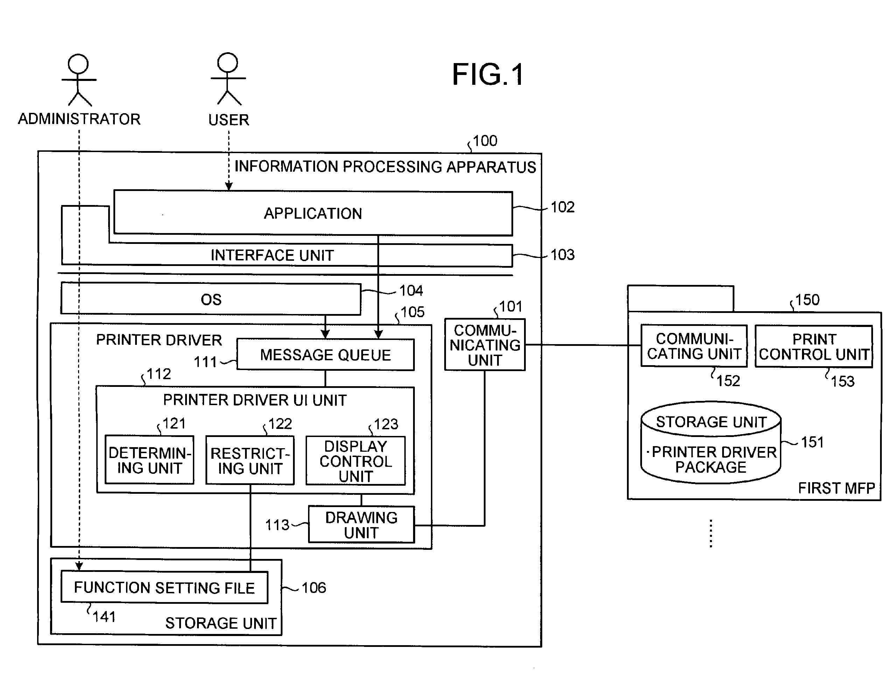

Fig. 1 is a block diagram of a configuration of a printing system according to a first embodiment of the present invention. As illustrated in Fig. 1, the printing system according to the first embodiment includes an information processing apparatus 100 and a first multifunction peripheral (MFP) 150. Although not illustrated, MFPs (e.g., a second MFP and a third MFP) other than the first MFP 150 may also be connected to the information processing apparatus 100.

The first MFP 150 has a structure of a printing apparatus, and includes, for example, a storage unit 151, a communicating unit 152, and a print control unit 153. The first MFP 150 according to the first embodiment is a printing apparatus including a printer function and at least two functions out of: a copier function; a scanner function; and a facsimile function. However, as a printing apparatus connected to the information processing apparatus 100, the first MFP 150 does not necessarily have to include such functions, and may be any printing apparatus having a printer function.

The storage unit 151 stores therein a printer driver package to be distributed to various information processing apparatuses. The storage unit 151 may be any storage unit generally used including, a hard disk drive (HDD), a solid state drive (SDD), and a memory card.

The printer driver package is a package including a printer driver for causing the first MFP 150 to execute printing, and a function setting file for restricting conditions of settable printing functions of the printer driver.

The communicating unit 152 transmits and receives data to and from the information processing apparatus 100 connected over the network. For example, the communicating unit 152 receives print data from a printer driver 105 of the information processing apparatus 100.

As another example, the communicating unit 152 transmits the printer driver package stored in the storage unit 151 to an information processing apparatus connected over a network. In this manner, an information processing apparatus can receive the printer driver package as long as the information processing apparatus is connected to the first MFP 150 over the network, enabling the printer driver for causing the first MFP 150 to execute printing to be installed thereto.

The print control unit 153 prints print data received from a printer driver 105 installed in the information processing apparatus 100, which is to be described later, via the communicating unit 152. At this time, the print control unit 153 prints the print data onto a recording sheet by controlling a plotter (not illustrated) and the like.

After the printer driver package is installed, any information processing apparatus would have the similar configuration as that of the information processing apparatus 100. Therefore, the configuration of the information processing apparatus 100 will now be explained.

The information processing apparatus 100 includes: a communicating unit 101; an application 102; an interface 103; an operating system (OS) 104; a printer driver 105; and a storage unit 106.

In the information processing apparatus 100 according to the first embodiment, conditions of settable printing functions are restricted when making a print request to the first MFP 150. The information processing apparatus 100 then controls to allow a user to select the conditions of the printing functions that are usually not permitted to select. The selection is allowed provided that such conditions of the printing functions are set for every piece of print data. A specific method for realizing such control will be described later.

The information processing apparatus 100 provides two methods for allowing the user to set conditions of printing functions. A first method is to allow the user to call up a print setting screen of the printer driver 105 via the OS 104, for example, not via an application, and to allow the user to set a print setting in the print setting screen. If a print setting is set via such a print setting screen, the setting is used as a normal (default) setting applied thereafter when the user prints arbitrary print data with arbitrary applications.

A second method is to allow the user to call up the print setting screen of the printer driver 105 via the application 102 and to allow the user to set a print setting in the print setting screen when the user wishes to execute printing on the application 102. When a print setting is set via such a print setting screen, the print setting is used as a temporary setting used only for printing currently executed on the application 102.

Therefore, in the information processing apparatus 100 according to the first embodiment, the settable print conditions are changed depending on whether the print setting is called up via an application. In other words, control is performed so that, when the print setting screen is called up via an application, the user is permitted to select conditions of a particular printing function, and when the print setting screen is called up via other programs (for example, the OS 104), the user is not permitted to use the conditions of the printing function.

In other words, the information processing apparatus 100 according to the first embodiment is characterized in that, when the print setting screen is called up via a non-application program (for example, the OS 104), conditions of functions permitted to be selected are restricted, so that the user is prohibited from making any change to the conditions in accordance with the intention of the user, and when the print setting screen is called up via an application (for example, the application 102), the user is temporarily permitted to use such conditions of the functions. A specific configuration of the information processing apparatus 100 will be explained below.

The communicating unit 101 transmits or receives data to and from the first MFP 150 and the like connected over the network. For example, the communicating unit 101 transmits a print request to the first MFP 150 and the like, together with print data.

The application 102 is an application for creating and updating arbitrary data. The application 102 can print data created or updated thereon as print data by calling up the printer driver 105.

The interface 103 is the interface 103 provided by the OS 104. The user can access the OS 104, the printer driver 105, or the storage unit 106 via the interface 103. Similarly, the application 102 and the like can access the OS 104, the printer driver 105, and the like via the interface 103.

The OS 104 is a computer program for managing hardware and software of the information processing apparatus 100. As representatives of the OS 104, Windows (registered trademark), UNIX (registered trademark), and the like are known.

The storage unit 106 stores therein a function setting file 141. The function setting file 141 is setting information indicating conditions of printing functions which are settable depending on a source of a print request. The function setting file 141 according to the first embodiment contains conditions of printing functions which are settable when a request for displaying the print setting screen is determined to be received via non-application program (the OS 104, for example). In other words, the function setting file 141 contains conditions of printing functions that are fixed (or not settable) when a request for displaying the print setting screen is received via a non-application program (the OS 104, for example). The function setting file 141 also specifies settings, operations, and connection targets and the like, which are default for the printer driver 105.

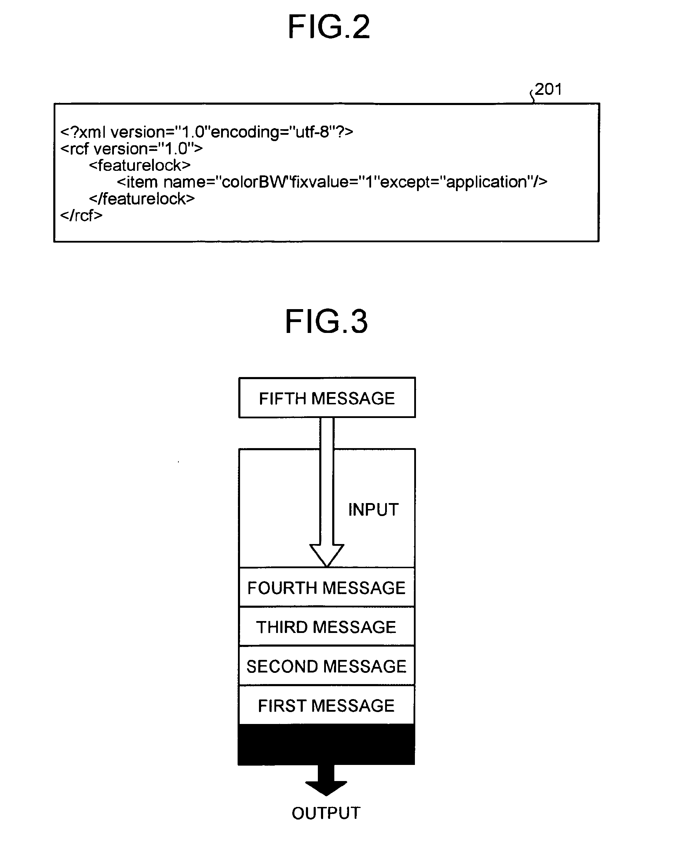

Fig. 2 is a schematic of an example of the function setting file 141. As illustrated in Fig. 2, the function setting file 141 has a data structure described in the Extensible Markup Language (XML) format. The function setting file 141 specifies that, in lines 201, the condition of a settable printing function is "colorBW". In other words, the condition of the printing function is fixed to "black-and-white" for a non-application program (the OS 104, for example). The example of the function setting file 141 illustrated in Fig. 2 specifies the condition of the printing function that is fixed for a non-application program (the OS 104, for example). However, the function setting file 141 may also specify a condition of a printing function settable only for an application.

The function setting file 141 is included in the printer driver package. When the printer driver 105 is installed in the information processing apparatus 100 by the printer driver package, the function setting file 141 is stored in the storage unit 106 as well. The function setting file 141 is a piece of data created and changed by an administrator, and the user has no authority to change the data.

In other words, the administrator sets print settings in the function setting file so that cost reduction becomes possible, and stores therein such print settings. The function setting file may be included in the printer driver package, and distributed together when the printer driver is distributed. In this manner, the settings intended by the administrator are used as default settings on all of the information processing apparatuses receiving the distributions of the printer driver. Alternatively, the administrator may edit the function setting file on the information processing apparatus 100.

In the first embodiment, the printer driver 105 reads out the function setting file 141 so as to identify the conditions of functions to be restricted. In the first embodiment, the conditions of functions to be restricted are maintained in the function setting file 141. However, the conditions of functions to be restricted may also be maintained in any other way. For example, the content of the function setting file included in the printer driver package may be reflected on the registry, and the printer driver may read out the registry so as to specify the conditions of functions to be restricted.

The printer driver 105 includes a message queue 111, a printer driver UI (user interface) unit 112, and a drawing unit 113. The printer driver 105 is installed in the information processing apparatus 100 and operates on the information processing apparatus 100. The printer driver 105 is not only installed by the printer driver package provided by the first MFP 150, but may also be installed by a printer driver package provided by a server and the like, or may be installed manually by the user.

The message queue 111 receives a message for the printer driver 105 issued by the user. For example, the message queue 111 receives an operation (e.g., a mouse operation such as a click, or an input of a character string from a keyboard) performed by the user on the print setting screen of the printer driver 105 as a message. As other examples, the message queue 111 receives a print setting request or a printing request used in causing the first MFP 150 to execute printing as a message. In other words, the message queue 111 has a function as a receiving unit.

Fig. 3 is a schematic of a structure of the message queue 111. As illustrated in Fig. 3, the message queue 111 according to the first embodiment is in a first-input first-output (FIFO) format, but may be in any other formats. In the first embodiment, the message queue 111 such as the one illustrated in Fig. 3 is provided for each computer program (for example, the application 102 and the OS 104).

The printer driver UI unit 112 includes a determining unit 121, a restricting unit 122, and a display control unit 123. The printer driver UI unit 112 provides the user with a user interface for allowing the user to conduct a setting for a function used in causing the printer driver 105 to execute printing. In this manner, the user can conduct a print setting via the printer driver UI unit 112.

The determining unit 121 determines the source of a message requesting to display the print setting screen received by the message queue 111. For example, the determining unit 121 determines whether the message queue 111 has received a request via the application 102 or via a non-application program (for example, the OS 104). In determining the source, any determining technique may be used. One way is to determine whether the "call" of a message is received via the OS 104 or the application 102, for example.

The restricting unit 122 more narrowly restricts the conditions of printing functions settable when the determining unit 121 determines that a request is received via a non-application program (for example, the OS 104) than the situation where the determining unit 121 determines that a request is received via the application 102. The restricting unit 122 according to the first embodiment reads out the function setting file 141 stored in the storage unit 106 and restricts the conditions of printing functions settable depending on a source of a print request.

For example, when the determining unit 121 determines that a request is received via the OS 104, the restricting unit 122 reads out the function setting file 141 illustrated in Fig. 2. Even if the printing function provides a plurality of conditions such as "color" and "black-and-white", the restricting unit 122 restricts the condition of the printing function to "black-and-white" only. The condition of the printing function thus restricted is then displayed by the display control unit 123.

The display control unit 123 displays a print setting screen for allowing the user to conduct print settings based on an input message. When displaying a print setting screen, the display control unit 123 according to the first embodiment differentiates the print setting screen to be displayed depending on the source of a request for displaying the print setting screen determined by the determining unit 121. In other words, when the determining unit 121 determines that the application 102 is the source of the request, the display control unit 123 controls to display a print setting screen including the conditions of printing functions that are settable when the call is made via the application 102 based on the function setting file 141. When the determining unit 121 determines that the OS 104 is the source of the request; the display control unit 123 controls to display a print setting screen including the conditions of printing functions that are restricted and settable by the restricting unit 122 based on the function setting file 141.

In the manner described above, when the determining unit 121 determines that a request is received via the application 102, the display control unit 123 controls to display a print setting screen including more conditions of printing functions by means of a restricting control performed by the restricting unit 122 based on the function setting file 141 than in the situation where the determining unit 121 determines that a request is received via the OS 104. A transition of screens by which a print setting screen is displayed will now be explained.

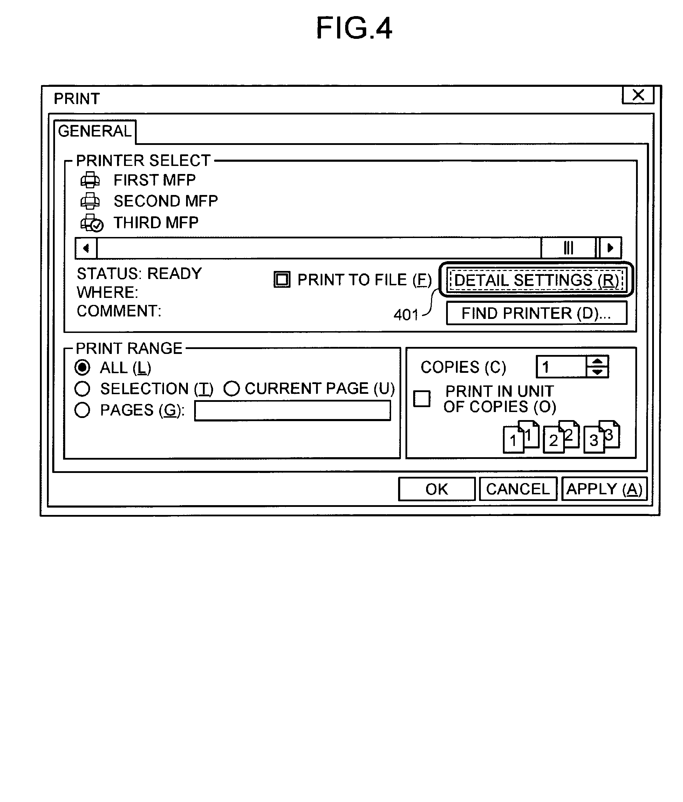

Fig. 4 is a schematic of an example of a print screen displayed by the display control unit 123 when the print screen is called up via the application 102. When a print request is issued via the application 102, the display control unit 123 displays the print screen illustrated in Fig. 4. When the user presses a detail setting button 401 in the print screen illustrated in Fig. 4, the display control unit 123 displays a print setting screen. In the above described case, target of the print setting is data that is currently being created on the application 102.

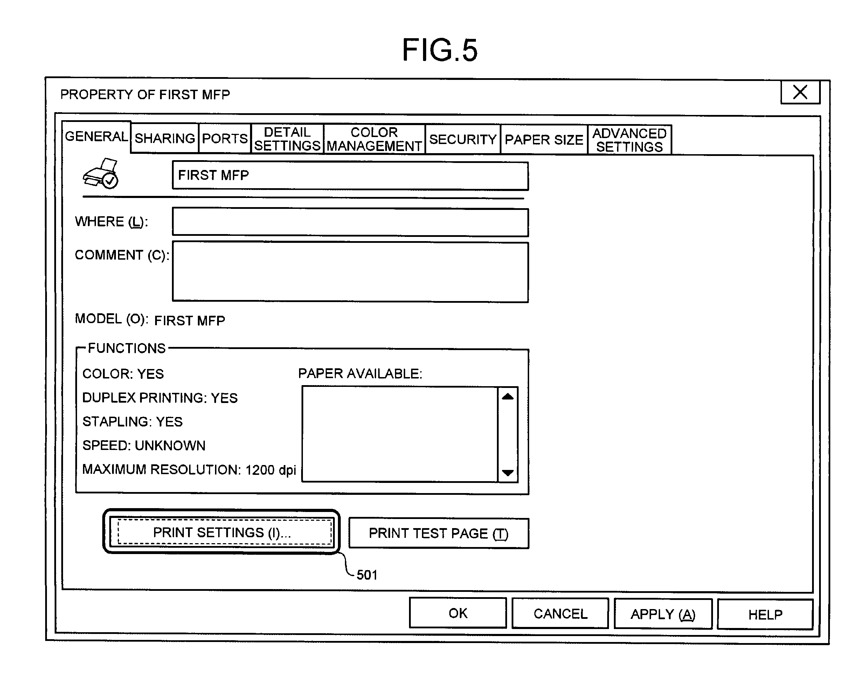

Meanwhile, Fig. 5 is a schematic of an example of a setting screen of the printer driver 105 (in other words, for the first MFP 150) displayed by the display control unit 123 when the setting screen is called up via the OS 104. In the example of the setting screen illustrated in Fig. 5, details of the printer driver 105 are displayed. When the user presses a print setting button 501 illustrated in Fig. 5, the display control unit 123 displays the print setting screen. In this case, because these settings are normal print settings, the target of the print settings is not limited.

Due to the difference of the target of the print settings, selectable conditions of printing functions are different depending on the cases when the print setting screen is displayed from the print screen as illustrated in Fig. 4 and when the print setting screen is displayed from the print screen as illustrated in Fig. 5.

In the manner described above, in the information processing apparatus 100 according to the first embodiment, because the determining unit 121 can determine whether the print setting screen is called up via the application 102 or via the OS 104 when displaying the print setting screen, an operation in using the conditions of functions can be made different.

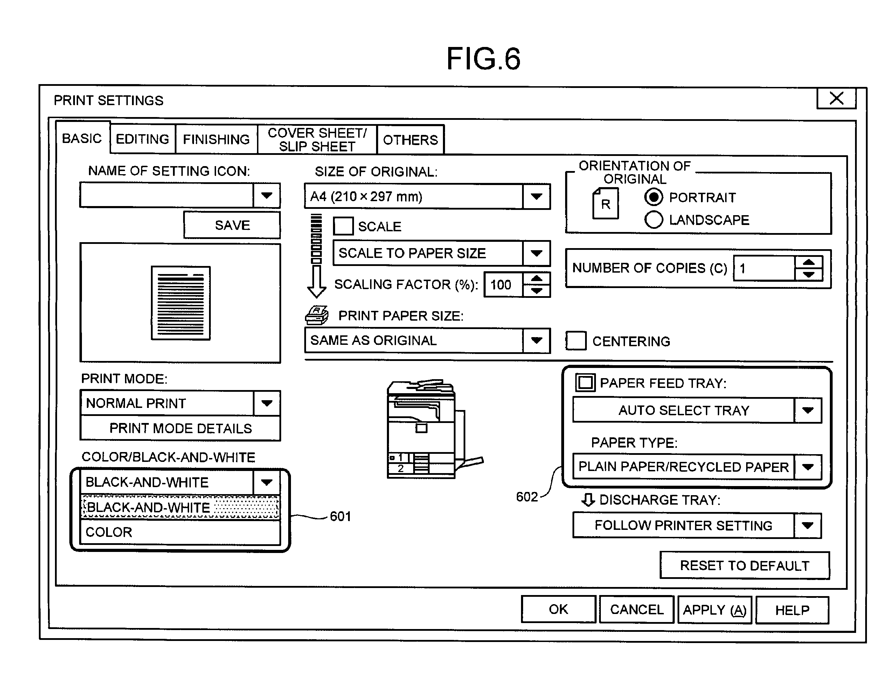

An example in which the restricting unit 122 does not restrict the conditions of printing functions based on the function setting file 141 because a request is received via the application 102 will now be explained. Fig. 6 is a schematic of an example of a print setting screen displayed by the display control unit 123 when the detail setting button 401 illustrated in Fig. 4 is pressed. Because the print setting screen illustrated in Fig. 6 is called up via the application 102, the conditions of the printing functions are not restricted based on the function setting file 141. Therefore, in the example illustrated in Fig. 6, the display control unit 123 displays "black-and-white" and "color" in a settable manner as illustrated in a selection section 601. In addition, the display control unit 123 displays paper feed trays in a settable manner so that the user can select the tray the user prefers as illustrated in a selection section 602. Furthermore, the display control unit 123 also displays paper types in a settable manner.

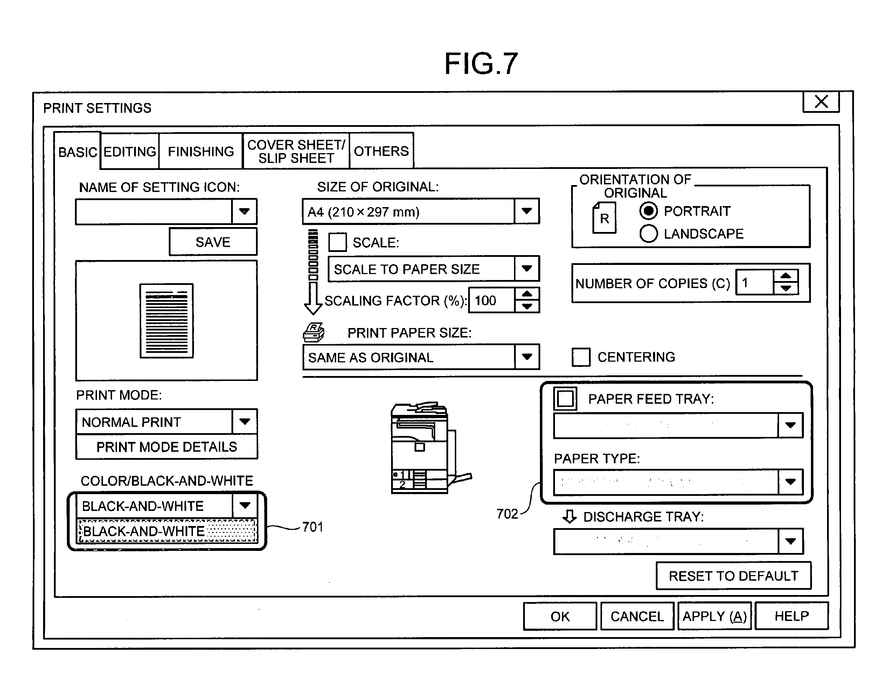

An example in which the restricting unit 122 restricts the conditions of the printing functions based on the function setting file 141 because a request is received via the OS 104 will now be explained. Fig. 7 is a schematic of an example of a print setting screen displayed by the display control unit 123 when the print setting button 501 illustrated in Fig. 5 is pressed. In the print setting screen illustrated in Fig. 7, the display control unit 123 displays the conditions of printing functions restricted by the restricting unit 122 based on the function setting file 141.

In the example of the screen illustrated in Fig. 7, the display control unit 123 displays only "black-and-white" as an option as illustrated in a selection section 701. In this manner, a selection of "color" is restricted for the item "color/black-and-white" compared with the screen displayed via the application 102.

Furthermore, the display control unit 123 displays the paper feed tray in a manner grayed out in a selection section 702 so as to prevent any selection to be made for the paper feed tray. In the first embodiment, the conditions of printing functions are restricted by showing such conditions of the printing functions in a manner prohibiting any change thereto. To achieve this goal, a setting for restricting a selection of a paper feed tray needs to be specified in the function setting file 141. In this manner, the display control unit 123 causes the restricting unit 122 to restrict the conditions of the function related to the paper feed tray to make the display.

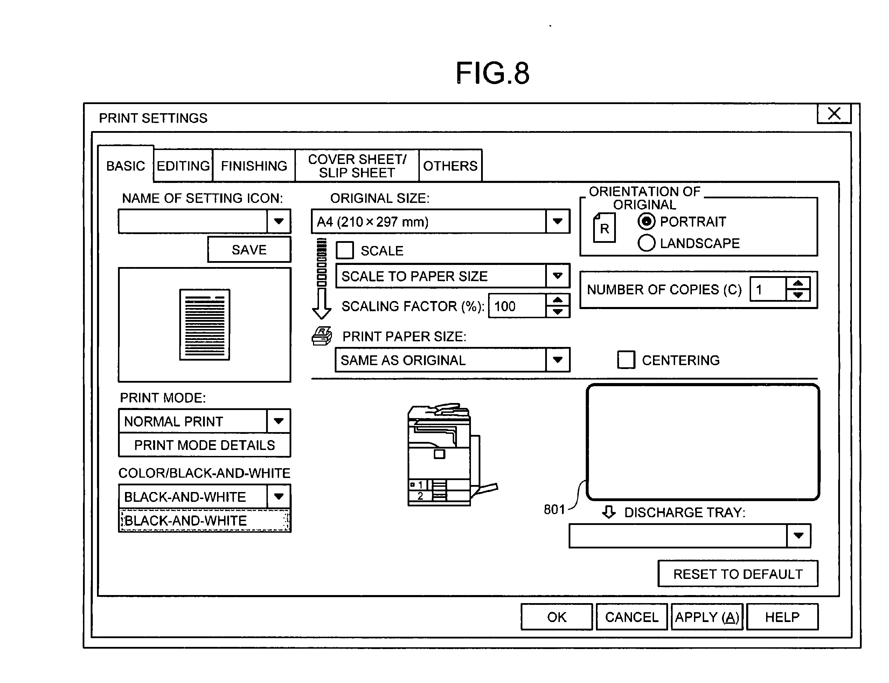

As a method for restricting the conditions of printing functions, any method other than restricting options in a selection section or graying out the conditions of the functions may be used. Fig. 8 is a schematic of an exemplary screen according to a variation of the first embodiment in which the display control unit 123 hides the printing functions per se. In the example illustrated in Fig. 8, the paper-feed-tray selecting function and the paper-type selecting function are hidden as illustrated in a section 801.

In the manner described above, in the print setting screen in which the conditions of printing functions are restricted, the display control unit 123 performs one of the following controls: hiding the conditions that are settable only to an application and showing other conditions as options; displaying the condition of a printing function set for the OS 104 in a manner grayed out so as to prohibit any change from being made thereto; and hiding the printing functions per se that are allowed under restricted conditions. Depending on the functions, appropriate control should be used. The display control unit 123 performs such display control so as to allow the user to recognize that use of such conditions of functions is prohibited.

The drawing unit 113 draws print data based on the print settings set by the printer driver UI unit 112 to generate print data used in the first MFP 150 to execute printing.

The drawing unit 113 according to the first embodiment generates print data, interpretable by the first MFP 150, from the print settings set via the printer driver UI unit 112 and the data for which printing is requested via the application 102. The drawing unit 113 then transmits the print data thus generated to the first MFP 150 via the communicating unit 101.

As a page description language (PDL) used for generating the print data, the drawing unit 113 according to the first embodiment uses any one or more of: the Printer Command Language (PCL) 5; the PCL 6 XL; the PostScript; the XML Paper Specification (XPS); the Graphics Language (GL); and the Refined Printing Command Stream (RPCS).

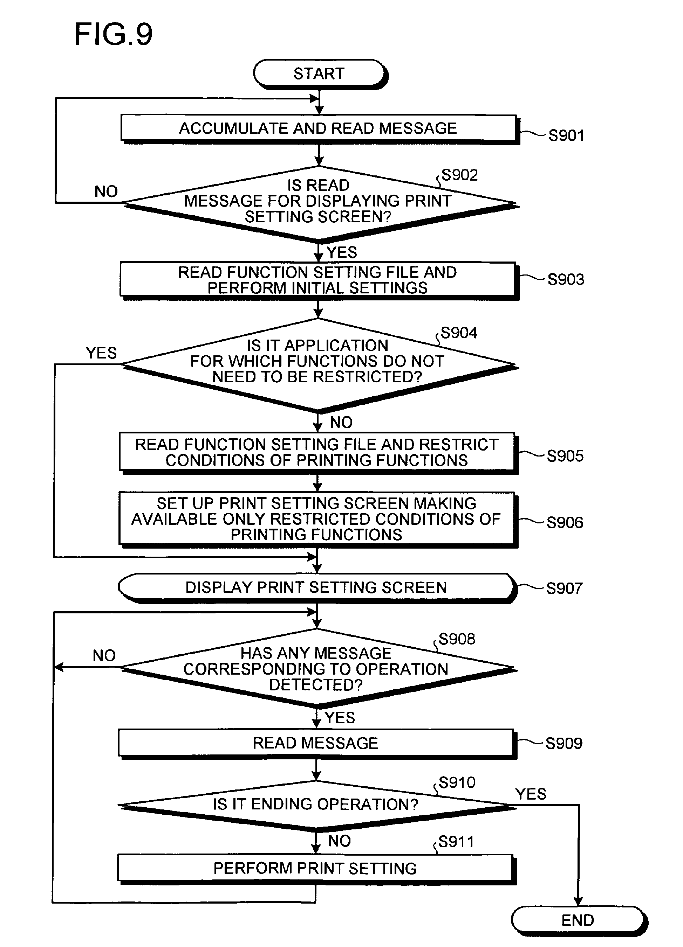

A process of completing the print setting in the information processing apparatus 100 according to the first embodiment will now be explained. Fig. 9 is a flowchart of the process performed in the information processing apparatus 100 according to the first embodiment. To begin with, the application 102 or the OS 104 sends information such as an operation performed on the user interface to the printer driver 105 as a message in a predetermined format.

The message queue 111 accumulates messages received from each computer program, and the printer driver UI unit 112 reads out the accumulated message (Step S901). The printer driver UI unit 112 then processes the read message in the order of the messages being received in FIFO to perform the print settings.

More specifically, the printer driver UI unit 112 determines whether the message read out from the message queue 111 is a request for displaying the print setting screen (Step S902). When the message is not a request for displaying the print setting screen (No at Step S902), the printer driver UI unit 112 performs a process corresponding to the message, and restarts the process with Step S901. In the manner described above, the printer driver UI unit 112 waits until a message indicating a request for displaying the print setting screen arrives.

Meanwhile, when the printer driver UI unit 112 determines that the message is a request for displaying the print setting screen (Yes at Step S902), the printer driver UI unit 112 reads the function setting file 141, and performs initial settings such as setting default values and performing an initializing operation (Step S903). The determining unit 121 then analyzes the transmission source of the message, and determines whether the source of the call is the application 102 for which the conditions of the printing functions do not need to be restricted (Step S904). When the determining unit 121 determines that the print setting screen is called up via the application 102 or when the conditions of the printing functions do not need to be restricted (Yes at Step S904), the determining unit 121 determines that the restricting unit 122 does not need to restrict the conditions of printing functions to be displayed in the print setting screen based on the function setting file 141, and the display control unit 123 displays the normal print setting screen (Step S907).

In the first embodiment, the determining unit 121 analyzes the message to determine whether the print setting screen is called up via an application. However, the determining unit 121 may also identify the source program based on data (a parameter) received from the OS 104 instead of the message. In such a situation, the determining unit 121 can identify the source program of the call based on information about the source of the call stored in the argument of a function used for calling up the print settings, for example.

Furthermore, the determining unit 121 may also identify the source from the name of the computer program (the name of the process) that is the issuer of the call up. The name of a process may be identified by using a function provided by the OS 104. In this situation, the determining unit 121 may determine that the source is an application if the source is not a specific process in the OS 104. As another alternative, the determining unit 121 may be preset with the names of predetermined applications in advance, and determine whether the name of the source program is included in the names of the applications maintained thereby.

Furthermore, the determining unit 121 may determine the source from the status (authority) of the process. This technique utilizes the fact that, in a recent OS, each process is assigned with an authority. Examples of the authorities include a kernel mode in which accesses to almost all resources are permitted, and a user mode in which accessible resources are limited. An application usually initiates a process in the user mode in which the authority is most limited. Therefore, when the process is in the user mode, the determining unit 121 can determine that the call is issued via an application.

Furthermore, the determining unit 121 may also determine the source based on a predetermined character string such as a title. Because a driver is a computer program caused to operate only after being called up, the driver sometimes has to operate using limited information depending on environments. Therefore, a situation in which available information is extremely limited should also be considered.

When the determining unit 121 determines that the source is not an application (the OS 104, for example) (No at Step S904), the restricting unit 122 reads the function setting file 141, and restricts the conditions of the settable printing functions (Step S905).

The restricting unit 122 then sets up a print setting screen in which conditions of the settable printing functions are restricted (Step S906). The display control unit 123 then displays the print setting screen in which the conditions of the printing functions are restricted by the restricting unit 122 based on the function setting file 141 (Step S907). In such a print setting screen, as mentioned above, the restricted conditions of the functions are displayed such that only one option is made available so as not to allow the user to make any selection, or that options are grayed out and fixed, for example.

The message queue 111 then detects whether any message indicating an operation in the print setting screen has been received (Step S908). If not received (No at Step S908), the message queue 111 repeats the process of Step S908.

If the message queue 111 detects that a message indicating an operation in the print setting screen has been received (Yes at Step S908), the printer driver UI unit 112 reads the message (Step S909). The printer driver UI unit 112 then determines whether the read message is an ending operation (Step S91 0). If the printer driver UI unit 112 determines that the message is not an ending operation (No at Step S91 0), the printer driver UI unit 112 performs a print setting, such as setting of an option and setting the number of copies, according to the content of the received message (Step S911). The process is then repeated from Step S908.

Meanwhile, if the printer driver UI unit 112 determines that the read message is an ending operation (Yes at Step S91 0), the printer driver UI unit 112 performs a printing process or a print cancelling process by the ending process, and ends the process.

According to the process described above, it is possible to control the display of a print setting screen on which different conditions of the printing functions are displayed depending on whether the source is an application or the non-application computer program. The process flow is not limited to the order illustrated in Fig. 9, and the process flow may be reordered if need be, for example.

In the information processing apparatus 100 according to the first embodiment, when the user calls up the print setting screen via the OS 104 to set default values, the settable conditions are restricted. Meanwhile, when the user calls up the print setting screen via an application, the user can specify any condition the user prefers. In this manner, the printing cost can be reduced while allowing the user to set print settings as the user prefers. Furthermore, because the settings are specified in the function setting file (or in the registry), it is possible to protect the print settings against being modified by an unknowledgeable user. In other words, the information processing apparatus 100 will execute printing following the settings specified under the intention of the administrator.

In the explanation of the information processing apparatus 100 according to the first embodiment, the functions are restricted by reading the function restriction information from the function setting file. However, such information may also be read out from the registry, for example, without limiting the source of read out to the function setting file.

In the information processing apparatus 100 according to the first embodiment, restrictions are normally applied to the settable printing functions on the printing apparatus, but only when the user desires, the user can select the conditions of the printing functions the user desires. Therefore, although the printing conditions are restricted, the user can execute printing in a manner that the user desires only when the user particularly desires to do so.

Furthermore, in the information processing apparatus 100 according to the first embodiment, the conditions of the printing functions are kept restricted after the user executes printing in a manner that the user desires unless the print setting screen is called up via an application. Therefore, the restrictions applied to the conditions of the functions are kept effective without the user being aware of the situation. Therefore, the settings intended by the administrator can be maintained.

Specifically, in the information processing apparatus 100 according to the first embodiment, because the conditions of the printing functions are restricted in a manner following the intention of the administrator, the total cost of ownership (TCO) can be reduced. In other words, the printing cost may be reduced as intended by the administrator while achieving printing to be executed under the settings the user desires.

### Second Embodiment

In the explanation of the first embodiment, the conditions of the printing functions are restricted when the source is a non-application computer program. However, the first embodiment is not limited to restricting the conditions of the printing functions when the source is a non-application computer program. Therefore, in the example explained in a second embodiment of the present invention, the conditions of the printing functions are restricted in combination with other conditions.

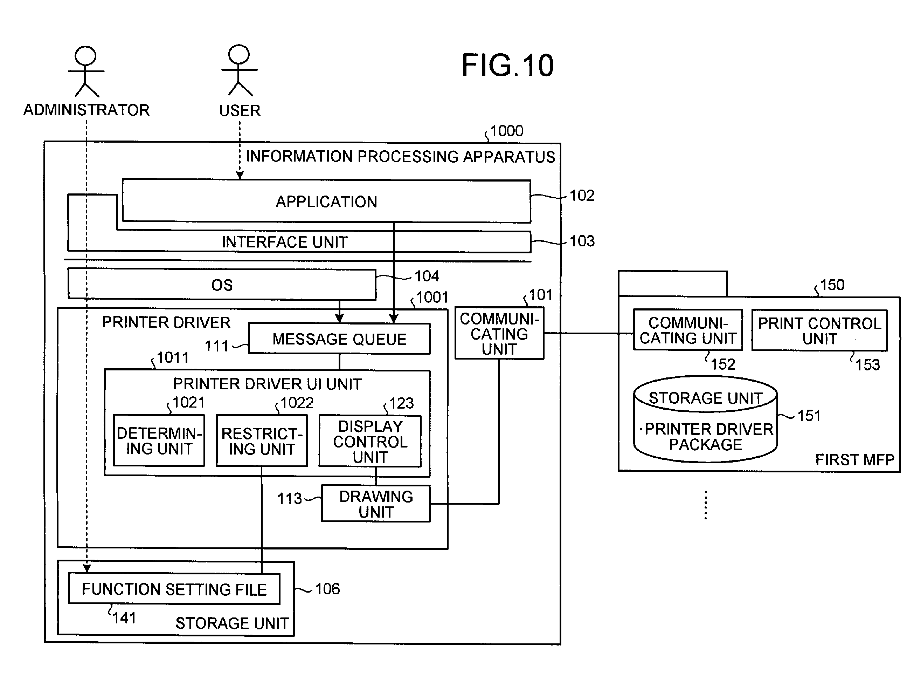

Fig. 10 is a block diagram of a configuration of a printing system according to the second embodiment. An information processing apparatus 1000 illustrated in Fig. 10 is different from the information processing apparatus 100 according to the first embodiment in that the printer driver 105 is replaced with a printer driver 1001; and the printer driver 1001 performs a different process from the process performed by the printer driver 105. In the explanation below, the same components as those according to the first embodiment are given the same reference numerals and explanations thereof are omitted.

The printer driver 1001 includes a printer unit 1011 performing a different process from the process performed by the printer driver UI unit 112 included in the printer driver 105 according to the first embodiment. The printer driver UI unit 1011 includes a determining unit 1021 performing a different process from the process performed by the determining unit 121 and a restricting unit 1022 performing a different process from the process performed by the restricting unit 122, both of which are included in the printer driver UI unit 112 according to the first embodiment.

Furthermore, the function setting file 141 stored in the storage unit 106 may also define the conditions of the printing functions that are restricted depending on the time of a day or type of data to be printed. Furthermore, the restrictions of the conditions of the printing functions defined in the function setting file 141 illustrated in Fig. 2 may be applied when printing is executed at predetermined time of a day or for a predetermined type of data.

The determining unit 1021 determines matters described below in addition to the process performed by the determining unit 121 according to the first embodiment. For example, the determining unit 1021 determines whether the time at which the print setting request is received is during a predetermined time of a day. The predetermined time of a day may be, for example, working hours. In other words, the conditions of the printing functions that are settable are restricted during the time of a day in which the user usually uses the information processing apparatus 1000. Conversely, during the time of a day in which only the administrator uses the information processing apparatus 1000, e.g., non-working hours, the conditions of the printing functions that are settable are not restricted.

Furthermore, the determining unit 1021 determines whether print data to be printed by the first MFP 150 matches a predetermined condition. The condition is a predetermined condition related to a format of the print data, such as a condition related to a timestamp, a format, and a file name. In this manner, when the print data matches the predetermined condition related to a timestamp, a format, a file name, or the like, the conditions of the printing functions are restricted.

In other words, the restricting unit 1022 according to the second embodiment performs a restricting process explained below in addition to the process performed by the restricting unit 122 according to the first embodiment. For example, if the determining unit 1021 determines that the current time is during the predetermined time of a day, the restricting unit 1022 restricts the conditions of the settable printing functions based on the function setting file 141. By performing such a restricting process, because the restriction of the printing function can be released during the time when the administrator performs maintenance, the administrator can perform the maintenance easily.

Furthermore, when the determining unit 1021 determines that the print data matches the predetermined condition, the restricting unit 1022 restricts the conditions of the settable printing functions based on the function setting file 141. By performing such a restricting process, because the restriction is applied depending on the type of print data, the conditions of the printing functions can be restricted in an appropriate manner for print data.

For example, it is assumed that the determining unit 1021 determines whether the file size of print data is equal to or larger than a predetermined file size. By the above described determination, the restricting unit 1022 may restrict the conditions of the settable printing functions for print data having a file size equal to or larger than the predetermined file size. In this manner, if the file size is too large, the color may be restricted to the black-and-white, for example. Accordingly, the control may be adapted to the print data.

If the current condition matches the predetermined condition related to the time of a day or print data, the display control unit 123 performs control to display the print setting screen on which the conditions of the settable printing functions are restricted based on the function setting file 141.

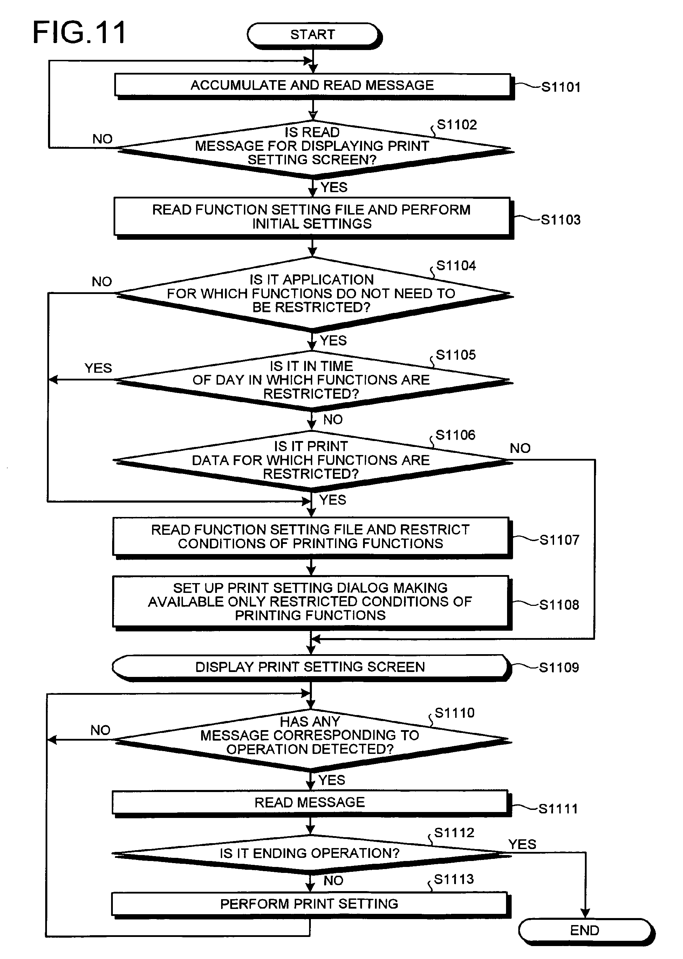

A process of completing the print setting in the information processing apparatus 1000 according to the second embodiment will now be explained. Fig. 11 is a flowchart of the process performed in the information processing apparatus 1000 according to the second embodiment.

To begin with, the same process as Steps S901 to S904 according to the first embodiment illustrated in Fig. 9 is performed to allow the printer driver 1001 to determine whether the source of the call up is an application 102 for which the conditions of the printing functions do not need to be restricted (Step S1101 to S1104).

When the determining unit 1021 determines that the source of the call up is an application, for example (Yes at Step S1104), the determining unit 1021 further determines whether the current time is during the predetermined time of a day in which the functions are to be restricted (Step S1105).

If the determining unit 1021 determines that the current time is not during the time of a day in which the functions are to be restricted (No at Step S1105), the determining unit 1021 further determines whether the print data to be printed via the application is print data for which the conditions of the functions are to be restricted (for example, whether the file size of the print data is equal to or larger than a predetermined file size) (Step S1106). If the determining unit 1021 determines that the print data is not print data for which the conditions of the functions are to be restricted (No at Step S1106), the display control unit 123 displays the normal print setting screen without performing the process of restricting the conditions of the printing functions (Step S1109).

Meanwhile, if the determining unit 1021 determines that the source of the call up is not an application (No at Step S1104), or the time is during the predetermined time of a day (Yes at Step S1105), or the print data is print data for which the conditions of the functions are to be restricted (Yes at Step S1106), the restricting unit 1022 reads the function setting file 141, and restricts the conditions of the settable printing functions (Step S1107).

Assuming that the same process as Step S906 to S911 according to the first embodiment illustrated in Fig. 9 is performed, explanations of the process at the steps thereafter are omitted (Step S1108 to S1113).

In addition to the advantageous effects achieved by the information processing apparatus 100 according to the first embodiment, in the information processing apparatus 1000 according to the second embodiment, various conditions may be combined to restrict the conditions of the functions, so that the printing cost can be reduced more appropriately while allowing the user to execute printing with print settings the user desires.

### Variation of Second Embodiment

In the explanation of the second embodiment, the condition related to the time of a day and the condition related to print data are combined to restrict the conditions of the printing functions. However, the second embodiment is not limited to combining the condition related to the time of a day and the condition related to print data. Therefore, in the example explained below as a variation, a condition whether the print data has been approved is combined with the conditions described above as well.

A determining unit 1021 according to the variation of the second embodiment determines whether the print data has been approved in addition to the process performed by the determining unit 121 according to the first embodiment.

Therefore, an approving function is added to the application 102 as a plug-in. In this manner, the user can receive an approval to data created on the application 102 as being the final version, that is, an approval for releasing the restriction of the printing function, from his/her superior.

In other words, when the determining unit 1021 determines that the source of the call up is the application 102, the determining unit 1021 further determines whether the print data for which printing is requested via the application 102 has been approved as described above. The restricting unit 1022 restricts the conditions of the printing functions when the determining unit 1021 determines that the approval has not been granted, and the restricting unit 1022 does not restrict the conditions of the printing functions when the approval has been granted.

In this manner, only when the print data is approved to be a final version by a superior, the user is permitted to print the print data in full-color.

In the information processing apparatus 1000 according to the variation, the conditions of the printing functions can be restricted more appropriately. Furthermore, the information processing apparatus may combine any other conditions to restrict the conditions of the printing functions.

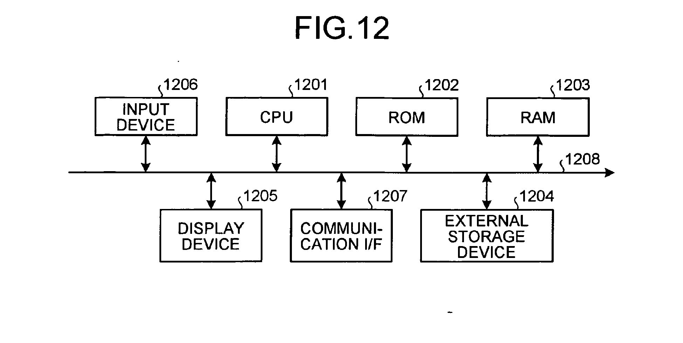

Fig. 12 is a schematic of a hardware configuration of the information processing apparatus according to the embodiments described above. As illustrated in FIG. 12, the information processing apparatus 100 or 1000 according to the embodiments includes a central processing unit (CPU) 1201, a read-only memory (ROM) 1202, a random access memory (RAM) 1203, an external storage device 1204 such as a hard disk drive (HDD), a display device 1205 such as a display, an input device 1206 such as a keyboard or a mouse, and a communication interface (I/F) 1207, and a bus 1208 connecting these components, and has a hardware configuration using a regular computer.

The printer driver (program) 105 or 1001 executed on the information processing apparatus 100 or 1000 according to the embodiments is provided in a manner recorded in a computer-readable recording medium such as a compact disk read-only memory (CD-ROM), a flexible disk (FD), CD-R (a compact disk recordable), and a DVD (digital versatile disk), as a file in an installable or an executable format.

Furthermore, the printer driver 105 or 1001 executed on the information processing apparatus 100 or 1000 according to the embodiments may be provided in a manner stored in a computer connected to a network such as the Internet to be made available for downloads via the network. Furthermore, the printer driver 105 or 1001 executed on the information processing apparatus 100 or 1000 according to the embodiments may be provided or distributed over a network such as the Internet.

Furthermore, the printer driver 105 or 1001 according to the embodiments may be provided in a manner incorporated in a ROM or the like in advance.

The printer driver 105 or 1001 executed on the information processing apparatus 100 or 1000 according to the embodiments has a modular structure including each of the modules explained above (the message queue, the printer driver UI unit, and the drawing unit). In the actual hardware, by causing the CPU to read the printer driver 105 or 1001 from the storage medium and to execute the printer driver 105 or 1001, each of the modules is loaded onto the main memory, and the message queue, the printer driver UI unit, and the drawing unit are provided on the main memory.

The present invention enables printing in a manner satisfying a user demand while enabling reduction in printing cost.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An information processing apparatus (100) comprising:
a receiving unit (111) that receives a request for a print setting used by a printing apparatus (150) in executing printing;
a determining unit (121) that determines a source of the request received by the receiving unit (111); and
a display control unit (123) that controls displaying a print setting screen based on setting information indicating conditions of settable printing functions depending on the source of the request when the determining unit (121) determines that a predetermined application is the source of the request.

2. The information processing apparatus (100) according to claim 1, wherein,
when the determining unit (121) determines that the predetermined application is the source of the request, the display control unit (123) controls to display a print setting screen including more conditions of the printing functions based on the setting information compared with when the determining unit (121) determines that the source of the request is an operating system.

3. The information processing apparatus (100) according to claim 1 or 2, wherein,
when the determining unit (121) determines that the operating system is the source of the request, the display control unit (123) performs one of controls chosen from:
hiding the conditions of the settable printing functions when the predetermined application is the source of the request;
displaying the conditions of the printing functions that are set for the operating system in an unchangeable manner; and
hiding the printing functions themselves in the print setting screen.

4. The information processing apparatus (100) according to any one of claims 1 to 3, wherein
the determining unit (121) further determines whether time at which the request for a print setting is received is during a predetermined time of a day, and
the display control unit (123) further controls to display a print setting screen based on the setting information indicating the conditions of the settable printing functions when the determining unit (121) determines that the time is during the predetermined time of a day.

5. The information processing apparatus (100) according to any one of claims 1 to 4, wherein
the determining unit (121) further determines whether print data to be printed in accordance with the print setting matches a predetermined condition related to the print data, and
the (123) further controls to display a print setting screen based on the setting information indicating the conditions of the settable printing functions when the determining unit (121) determines that the print data matches the predetermined condition.

6. The information processing apparatus (100) according to any one of claims 1 to 5, wherein
the determining unit (121) further determines whether the print data to be printed in accordance with the print setting is approved to release a restriction on the printing functions, and
the display control unit (123) further controls to display a print setting screen based on the setting information indicating the conditions of the settable printing functions when the determining unit (121) determines that the print data is approved.

7. The information processing apparatus (100) according to any one of claims 1 to 6, further comprising:
a storage unit that stores therein the setting information, wherein
the display control unit (123) controls to display a print setting screen based on the setting information stored in the storage unit.

8. A method of processing information in an information processing apparatus (100) that includes a generating unit, and an output unit, the method comprising:
receiving a request for a print setting used by a printing apparatus (150) in executing printing;
determining a source of the request received at the receiving; and
controlling displaying a print setting screen based on setting information indicating conditions of settable printing functions depending on the source of the request when a predetermined application is determined to be the source of the request at the determining.

9. The method according to claim 8, wherein the controlling includes,
when the predetermined application is determined to be the source of the request at the determining, controlling to display a print setting screen including more conditions of the printing functions based on the setting information than when the source of the request is determined to be an operating system.

10. The method according to claim 8 or 9, wherein the controlling includes,
when an operating system is determined to be the source of the request at the determining, controlling to display the print setting screen using one of techniques chosen from:
hiding the conditions of the settable printing functions when the predetermined application is the source of the request;
displaying the conditions of the printing functions being set for the operating system in an unchangeable manner; and
hiding the predetermined printing functions themselves.

11. The method according to any one of claims 8 to 10, wherein
the determining includes determining whether time at which the request for a print setting is received is during a predetermined time of a day, and
the controlling includes controlling to display a print setting screen based on the setting information indicating the conditions of the settable printing functions when the time is determined to be during a predetermined time of a day at the determining.

12. The method according to any one of claims 8 to 11, wherein
the determining further includes determining whether print data to be printed in accordance with the print setting matches a predetermined condition relating to the print data, and
the controlling further includes controlling to display a print setting screen based on the setting information indicating the conditions of the settable printing functions when the print data is determined to match the condition at the determining.

13. The method according to any one of claims 8 to 12, wherein
the determining further includes determining whether print data to be printed in accordance with the print setting is approved to release a restriction of the printing functions, and
the controlling includes controlling to display a print setting screen based on the setting information indicating the conditions of the settable printing functions when the print data is determined to be approved at the determining.

14. The method according to any one of claims 8 to 13, wherein the controlling includes controlling to display a print setting screen based on the setting information stored in a storage unit.

15. A carrier medium carrying computer readable code for controlling a computer to carry out the method of any one of claims 8 to 14.
